# EUROPÄISCHE PATENTSCHRIFT

(11) **EP 2 511 315 B1**
(45) Veröffentlichungstag und Bekanntmachung des Hinweises auf die Patenterteilung: **23.05.2018**
(21) Anmeldenummer: 12160503.4
(22) Anmeldetag: 21.03.2012
(51) Int. Cl.: C08G 18/38, C08G 101/00, C08G 18/16, C08J 9/14

(54) **Zusammensetzung, enthaltend spezielle Amide und organomodifizierte Siloxane, geeignet zur Herstellung von Polyurethanschäumen**
Compound containing special amides and organomodified siloxanes, suitable for producing polyurethane foams
Composition comportant une amide spéciale et de la siloxane organomodifiée adaptée à la fabrication de mousses de polyuréthanes

(30) Priorität: 15.04.2011 DE 102011007479
(43) Veröffentlichungstag der Anmeldung: 17.10.2012
(73) Patentinhaber: Evonik Degussa GmbH, 45128 Essen (DE)
(72) Erfinder: Glos, Martin, 46325 Borken (DE); Schiller, Carsten, 45470 Mülheim an der Ruhr (DE); Eilbracht, Christian, 44627 Herne (DE)

(56) Entgegenhaltungen:
- EP-A1- 0 672 697
- EP-A1- 0 767 199
- EP-A1- 1 985 642
- WO-A1-2007/019063
- GB-A- 1 247 671

## Beschreibung

Gegenstand der vorliegenden Erfindung sind Zusammensetzungen nach Maßgabe des Anspruches 1, geeignet zur Herstellung von Polyurethanschäumen, die zumindest eine Polyolkomponente, einen Katalysator, der die Ausbildung einer Urethan- oder Isocyanurat-Bindung katalysiert, optional ein Treibmittel, gegebenenfalls weitere Additive und gegebenenfalls eine Isocyanat-Komponente aufweisen, welche dadurch gekennzeichnet sind, dass sie zusätzlich eine Abmischung aufweist, die mindestens ein spezielles Amid und mindest eine Siloxanverbindung aufweist, wobei das Massenverhältnis von Siloxanverbindungen zu Verbindungen der Formel (I) von 1 zu 1 bis 5 zu 1 beträgt, ein Verfahren zur Herstellung von Polyurethan- bzw. Polyisocyanuratschaumstoffen, insbesondere Hartschäume), die Verwendung der Schaumstoffe, insbesondere als Isolationsmaterialien sowie die Isolationsmaterialien selbst.

Bei der Herstellung von Schäumen auf Basis von Polyolen und Isocyanaten werden häufig zell- bzw. schaumstabilisierende Additive eingesetzt, welche für eine gleichmäßige und störungsarme Schaumstruktur sorgen und damit die Gebrauchseigenschaften des Schaumstoffes im wesentlichen Maße positiv beeinflussen. Besonders effektiv sind Tenside auf der Basis von organisch modifizierten Siloxanen, welche daher den bevorzugten Typ der Schaumstabilisatoren darstellen.

Diese Siloxane werden bei der Verschäumung oftmals nicht in reiner Form zugegeben, sondern mit weiteren nicht Silizium-haltigen Komponenten abgemischt. Dies kann dazu dienen, die Dosierbarkeit zu verbessern, da oftmals nur sehr geringe Mengen an Siloxan zu der zu verschäumenden Mischung zugegeben werden müssen. Außerdem kann die Abmischkomponente auch die Löslichkeit der Siloxane in der Polyolmischung verbessern und damit zusätzlich Einfluss auf die Verschäumung und die Schaumeigenschaften nehmen.

Es kann von Vorteil sein, wenn die Abmischkomponente ebenfalls tensidische Eigenschaften hat, die die Schaumeigenschaften positiv beeinflussen. So werden in jüngerer Zeit immer häufiger Polyurethanschäume verlangt, die möglichst geringe Gehalte an Siloxan-Schaumstabilisatoren oder auch keine Siloxan-haltigen Stabilisatoren aufweisen.

Aus dem Stand der Technik sind verschiedene Schaumstabilisatoren bzw. Abmischkomponenten bekannt:
EP 0839852 A2 beschreibt die Herstellung von Polyurethanschaum unter Verwendung von Siloxanen in Abmischungen mit pflanzlichen Ölen bestehend aus unterschiedlichen Triglyceriden. Die Öle scheinen aber keinen Einfluss auf die Schaumqualität zu haben.

In den Anmeldungen DE 1802500 und DE 1802503 werden Alkanolamide, die z. B. durch Umsetzung von Diethanolamin mit natürlichen Fettsäuren oder natürlich vorkommenden Glyceriden erhalten werden, und deren Verwendung als Polyolkomponente bei der Herstellung von Polyurethanschäumen beschrieben. In der Beschreibung wird die Möglichkeit erwähnt, dass auf die Verwendung von Siloxan-Tensiden verzichtet werden kann. Hier werden die Amide als Polyolkomponente eingesetzt und stellen einen erheblichen Teil der Formulierung dar. Die Schaumherstellung in den Bespielen erfolgt mit Silikonen als stabilisierendes Additiv, die in Anteilen von kleiner 5% bezogen auf das Amid eingesetzt werden.

Ähnlich werden in den Anmeldungen DE 1745443, DE 1745459 und US 3578612 Alkanolamide von polymeren Fettsäure oder Alkokylate davon beschrieben, die als Polyol-Komponente zur Herstellung von Polyurethanschäumen verwendet werden. Bei der Verschäumung ist immer auch ein Siloxan als Stabilisator in geringen Mengen (kleiner 5% auf Amid bezogen) vorhanden.

In EP 0767199 wird die Verwendung von Soya-basiertem Diethanolamid zur Verbesserung der Pentanlöslichkeit beschrieben. Hierbei kommen bei der Verschäumung handelsübliche Siloxane als Stabilisator zum Einsatz. Die Anteile and Diethanolamid sind mindestens 20fach höher als die Anteile an Siloxan. Damit ist der Siloxananteil kleiner 5% bezogen auf das Amid.

In US 3629308 sind Butanol gestartete Polyether als Abmischkomponente für Organosiloxane beschrieben.

In EP 0048984 B1 sind Abmischungen von Siloxanen mit verschiedenen wasserlöslichen Tensiden zur Verwendung in Polyester-Polyurethanschaum beschrieben. Diese Tenside sind oftmals schlecht bioabbaubar.

In EP 0043110 A1 sind Abmischungen von Siloxanen mit Lösungsmitteln. wie z.B. Alkoxylate an Glycerin, Wasser, TMP, Butanol oder Nonylphenol zur Verwendung in hochelastischem Polyurethanschaum beschrieben.

In US 5236961 wird die Herstellung von Polyurethanschäumen unter Verwendung von Alkylphenol-Ethoxylaten als Schaumstabilisatoren beschrieben, wobei diese aus petrochemischen Quellen stammen.

In der EP 0734404 wird die Herstellung von PU-Schäume unter Verwendung von Polyalkylenoxiden beschreiben, wobei die Polyalkylenoxide aufgebaut werden indem man 10-90% Butylenoxid verwendet.

EP 1985642 A1 beschreibt eine Zusammensetzung zur Herstellung eines Polyurethanschaums umfassend einen flüchtigen tertiären Amin-Urethankatalysator sowie ein Amid-Additiv, wobei es sich insbesondere um Umsetzungsprodukte von C1 bis C36- Carbonsäuren mit Polyethylenpolyaminen und Polypropylenpolyaminen handelt.

Viele der im Stand der Technik beschriebenen Schaumstabilisatoren, insbesondere die Si-basierten, bzw. Abmischkomponenten zeichnen sich durch ungünstige Toxizität, schlechte Bioabbaubarkeit oder Hydrolyseempfindlichkeit aus.

Insbesondere bei der Verwendung von Polyurethanschäumen als Isolationsmaterialien werden solche Polyurethanschäume benötigt, die einen kleinen Wärmeleitfähigkeitskoeffizient (Lambda-Wert) aufweisen.

Aufgabe der vorliegenden Erfindung war die Bereitstellung von Polyurethanschäumen, die einen oder mehrere der oben genannten Nachteile nicht aufweisen. Insbesondere sollten Polyurethanschäume bereitgestellt werden, die einen kleinen Wärmeleitfähigkeitskoeffizienten aufweisen.

Überraschenderweise wurde gefunden, dass diese Aufgabe dadurch gelöst werden kann, dass Zusammensetzungen nach Maßgabe des Anspruchs 1 bei der Herstellung von Polyurethanschäumen verwendet werden, die eine Abmischung enthält, die mindestens ein spezielles Amid und mindest eine Siloxanverbindung aufweist, wobei das Massenverhältnis von Siloxanverbindungen zu Verbindungen der Formel (I) (in der Abmischung) größer 1 zu 10 beträgt.

Gegenstand der vorliegenden Erfindung ist deshalb eine Zusammensetzung gemäß den Ansprüchen, geeignet zur Herstellung von Polyurethanschäumen, die zumindest eine Polyolkomponente, einen Katalysator, der die Ausbildung einer Urethan- oder Isocyanurat-Bindung katalysiert, optional ein Treibmittel, gegebenenfalls weitere Additive und gegebenenfalls eine Isocyanat-Komponente aufweist, und die dadurch gekennzeichnet ist, dass die Zusammensetzung zusätzlich eine Abmischung aufweist, die mindestens ein Amid der Formel (I) 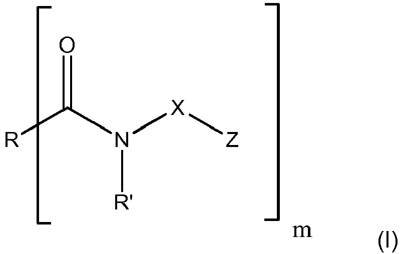 und mindest eine Siloxanverbindung aufweist, wobei das Massenverhältnis von Siloxanverbindungen zu Verbindungen der Formel (I) von 1 zu 1 bis 5 zu 1 beträgt, wobei die Zusammensetzung als Amid der Formel (I) mindestens eine Verbindung der Formel (II) enthält, wie in Anspruch 1 angegeben.

Ebenfalls Gegenstand der vorliegenden Erfindung ist eine Verfahren zur Herstellung von Polyurethan- oder Polyisocyanuratschaumstoffen (Polyurethanschäume), durch Umsetzung der erfindungsgemäßen Zusammensetzungen.

Außerdem sind Gegenstand der vorliegenden Erfindung Polyurethanschäume, enthaltend mindestens eine Amidverbindung gemäß Formel (I) und mindest eine Siloxanverbindung, die vorzugsweise durch das erfindungsgemäße Verfahren erhältlich sind, jeweils nach Maßgabe der Ansprüche 10 oder 11.

Des weiteren ist Gegenstand der vorliegenden Erfindung die Verwendung der erfindungsgemäßen Polyurethanschäumen als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen sowie Kühlapparaturen, die als Isoliermaterial einen erfindungsgemäßen Polyurethanschaum aufweisen.

Durch die Verwendung der erfindungsgemäßen Zusammensetzungen können Polyurethanschäume hergestellt werden, die auf Grund des niedriegen Wärmeleitfähigkeitskoeffizienten eine besonders gute Wärmedämmung aufweisen.

Ein weiterer Vorteil der Verwendung der erfindungsgemäßen Zusammensetzungen besteht darin, dass diese universell mit (nahezu) allen bekannten Treibmitteln eingesetzt werden können.

Die Verwendung der erfindungsgemäßen Zusammensetzung hat außerdem den Vorteil, dass Polyurethanschäume mit besonders guter Oberfläche (wenig Fehler an der Oberfläche) hergestellt werden können. Zum einen hilft dies bei der Optimierung der Energieeffizienz von Kühlmöbeln zum anderen können so auch ästhetisch anspruchsvolle Kühlmöbel mit glänzenden Metalldeckschichten unter Verwendung von Metalldeckschichten mit geringen Materialdicken hergestellt werden. Hier kann ein fehlerhafter Schaum entsprechende Qualitätseinbußen mit sich bringen, die zum Beispiel durch Beulen an der Metalldeckschicht sichtbar werden können.

Die erfindungsgemäß eingesetzten Abmischungen haben außerdem den Vorteil, dass sie zu einer besseren Löslichkeit von Pentan, einem weit verbreiteten Treibmittel, führen, wodurch den entsprechenden Zusammensetzungen zur Schaumherstellung mehr Treibmittel zugesetzt werden kann bzw. die Neigung zu Trübungen bei den Zusammensetzungen geringer wird.

Ein weiterer Vorteil der Verwendung der erfindungsgemäß eingesetzten Abmischung besteht darin, dass die enthaltenen Amidverbindungen zum großen Teil auf nachwachsenden Rohstoffen basieren können.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethanschaum (PU-Schaum) wird im Rahmen der vorliegenden Erfindung Schaum verstanden, der als Reaktionsprodukt basierend auf Isocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanhartschäume.

Die erfindungsgemäße Zusammensetzung, geeignet zur Herstellung von Polyurethanschäumen, insbesondere Polyurethanhartschäume, die zumindest eine Polyolkomponente, einen Katalysator, der die Ausbildung einer Urethan- oder Isocyanurat-Bindung katalysiert, optional ein Treibmittel, gegebenenfalls weitere Additive und gegebenenfalls eine Isocyanat-Komponente aufweist, zeichnet sich dadurch aus, dass die Zusammensetzung zusätzlich eine Abmischung aufweist, die mindestens ein Amid der Formel (I) 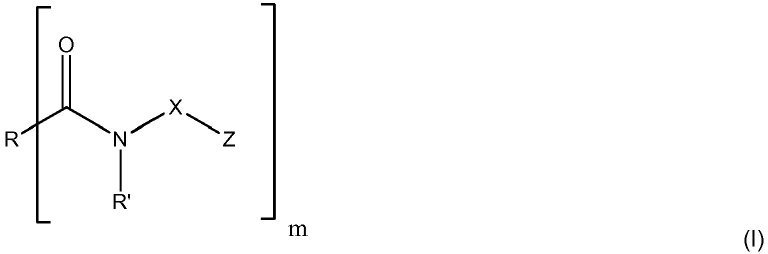 mit
R einem m-bindigen organischen Rest, vorzugsweise Kohlenwasserstoffrest, bevorzugt Kohlenwasserstoffrest mit 1 bis 30 Kohlenstoffatomen, vorzugsweise mit 8 bis 20 Kohlenstoffatomen, wenn m = 1 und 1 bis 7, vorzugsweise 2 bis 6 Kohlenstoffatomen, wenn m = 2 oder 3 ist, besonders bevorzugt gesättigter Kohlenwasserstoffrest,
R' gleich oder verschieden H oder organischer Rest, vorzugsweise C₁-C₁₂-Alkyl-, Aryl-, Alkylaryl-Rest-, der ggf. Sauerstoff- oder Stickstoffatome, insbesondere Hydroxy- oder Amino-Gruppen aufweisen kann, oder ein Rest-X-Z,
m = 1 bis 5, vorzugsweise m = 1, 2 oder 3,
Z gleich oder verschieden OH oder NHR", mit R" = H oder Alkyl, insbesondere Alkyl mit 1 bis 30 Kohlenstoffatomen, vorzugsweise H, und
X gleich oder verschieden ein zweibindiger organischer Rest mit mindestens zwei Kohlenstoffatomen, vorzugsweise ein Kohlenwasserstoffrest, bevorzugt ein Rest - (CH2)_{w}- mit w = 2 bis 5, besonders bevorzugt ein Ethylen -Rest, und mindest eine Siloxanverbindung aufweist, wobei das Massenverhältnis von Siloxanverbindungen zu Verbindungen der Formel (I) von 1 zu 1 bis 5 zu 1, insbesondere von 1 zu 1 bis 4 zu 1 beträgt, wobei die Zusammensetzung als Amid der Formel (I) mindestens eine Verbindung der Formel (II) enthält, wie in Anspruch 1 angegeben. Das Amid der Formel (I) basiert vorzugsweise auf einer Fettsäure und einem Alkanolamin.

Geeignete Amide der Formel (I) können z. B. durch Umsetzung von Alkanolaminen mit Carbonsäuren, bevorzugt von Fettsäuren oder Fettsäureestern, hergestellt werden.

Die Herstellung von Säureamiden kann nach den im Stand der Technik, so z. Z. in DE 1802500; DE 1802503, DE 1745443, DE 1745459 und US 3578612 bekannten Verfahren erfolgen. Es können hier als Rohstoffe z. B. die entsprechenden Carbonsäuren verwendet werden und die Amidbildung unter Wasserabspaltung stattfinden. Ebenso können Carbonsäureester, wie beispielsweise Methylester eingesetzt werden, wobei dann Methanol abgespalten wird. Besonders bevorzugt ist die Verwendung von Glyceriden aus den natürlich vorkommenden Fetten und Ölen, wobei das bei der Amidierung entstehende Glycerin im Reaktionsgemisch verbleiben kann. Ebenso können beispielweise bei der Umsetzung von Triglyceriden mit Aminen noch Di- und Mono-Glyceride im Reaktionsgemisch vorliegen, wenn die Reaktionsbedingungen entsprechend gewählt wurden. Bei Verwendung von Carbonsäureestern werden gegebenenfalls entsprechende Katalysatoren wie z.B. Alkoholate eingesetzt, die eine Amidierung bei relativ milden Bedingungen, im Vergleich zur oben genannten Wasserabspaltung, ermöglichen. Bei der Verwendung von höher-funktionellen Aminen (DETA, AEEA, TRIS) kann es bei der Herstellung der Amide auch zur Bildung von entsprechenden cyclischen Amiden kommen wie Imidazolinen oder Oxazolinen.

Falls bei der Amidierung ein basischer Katalysator verwendet wird kann es vorteilhaft sein mit einer entsprechenden Menge an organischer oder anorganischer Säure anschließend eine Neutralisation durchzuführen. Geeignete Verbindungen sind dem Fachmann bekannt.

Besonders bevorzugt ist die Neutralisation, der durch basische Katalyse hergestellten Amide, mit organischen Anhydriden von Dicarbonsäuren, da diese mit den zur Verfügung stehenden OH- oder NH-Funktionen reagieren können und dadurch angebunden werden, und somit später im fertigen Schaum nicht in Form von freien Carbonsäuren als Emission anfallen können. Außerdem werden z. B. bei der Verwendung von Alkali-Alkoholaten bei der Neutralisation dann entsprechende Ester gebildet, so dass die freien Alkohole nicht aus dem System entweichen können.

Bevorzugte organische Anhydride sind cyclische Anhydride wie zum Beispiel Bernsteinsäureanhydrid, Maleinsäureanhydrid, Alkylbernsteinsäureanhydride, wie Dodecylbersteinsäureanhydrid oder Polyisobutylenbernsteinsäureanhydrid, ebenso geeignet sind Addukte von Maleinsäureanhydrid an entsprechende Polyolefine wie beispielsweise Polybutadiene, Copolymere aus Maleinsäureanhydrid und Olefinen, Stryrol-Maleinsäureanhydrid-Copolymere, Vinylether-Maleinsäureanhydrid-Copolymere, sowie generell Copolymere die Maleinsäureanhydrid als Monomer enthalten, Phthalsäureanhydrid, Benzophenontetracarboxyldianhydrid, Pyromellitsäuredianhydrid, Itaconsäure-Anhydrid oder ähnliche Strukturen. Beispiele für kommerziell erhältliche Anhydride dieser Art sind z. B. die Poylvest®-Typen von Evonik Degussa GmbH oder Ricon® MA-Typen von Sartomer.

Sämtliche Reaktionsschritte können in Substanz oder auch in geeigneten Lösungsmitteln durchgeführt werden. Bei Verwendung von Lösungsmitteln kann der Gehalt an "Aktivsubstanz" im Bereich von 10 bis 99 Massen-% bevorzugt 20 bis 98 Massen-%, besonders bevorzugt 30 bis 97 Massen-% bezogen auf die Gesamtzusammensetzung liegen.

### Carbonsäuren:

Als Carbonsäuren können zur Herstellung der Amide der Formel (I) z. B. Monocarbonsäuren, Dicarbonsäuren, Tricarbonsäuren, Tetracarbonsäuren auf Basis von aliphatischen oder aromatischen Kohlenwasserstoffen oder deren Derivate eingesetzt werden.

Beispiele für Alkylreste der Monocarbonsäuren sind: Methyl, Ethyl, Propyl, Butyl, Pentyl, Hexyl, Heptyl, Octyl, Nonyl oder Decyl, und dergleichen, bevorzugt sind hier 2-Ethylhexansäure, Nonansäure, Isononansäure.

Beispiele für Alkenylgruppen beinhalten: Ethenyl, Propenyl, Butenyl, Pentenyl, Hexenyl, Heptenyl, Octenyl, Nonenyl, Decenyl, und dergleichen.

Beispiele für aromatische Säuren beinhalten: Aryl und Alkylaryl (Alkylaryl ist festgelegt als eine Aryl-substituierte Alkyl- or Arylalkygruppe), wie beispielsweise: Phenyl, Alkylsubstituiertes Phenyl, Naphthyl, Alkyl-substitutiertes Naphthyl Tolyl, Benzyl, Dimethylphenyl, Trimethylphenyl, Phenylethyl, Phenylpropyl, Phenylbutyl, Propyl-2-phenylethyl, Salicyl und dergleichen.

Aromatische Dicarbonsäuren können z. B. sein: Isophthalsäure, Terephthalsäure oder Phthalsäure. Als aliphatische Dicarbonsäuren können beispielsweise verwendet werden: Bernsteinsäure, Malonsäure, Adipinsäure, Dodecandicarbonsäure, Maleinsäure, Fumarsäure, Itaconsäure, Citraconsäure, Mesaconsäure, Weinsäure, Äpfelsäure, Malonsäure, Glutarsäure, Adipinsäure, Pimelinsäure, Korksäure, Azelainsäure, Sebacinsäure, Zitronensäure.

Als höher funktionelle Säuren können beispielsweise eingesetzt werden: Trimesinsäure, Pyromellitsäure, Benzophenontetracarbonsäure

Bevorzugte Säuren sind geradkettige gesättigte oder ungesättigte Fettsäuren mit bis zu 40 C-Atomen wie z. B. Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpa-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14-Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen, wie z.B. Rapsölsäure, Soyafettsäure, Sonnenblumenfettsäure, Erdnussfettsäure und Tallölfettsäure. Weiterhin können Dimer- und Oligomerfettsäuren, wie sie bei der Oligomerisierung ungesättigter Fettsäuren entstehen, verwendet werden.

Quellen für geeignete Fettsäuren oder Fettsäureester besonders Glyceride können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonneblumen, Knochenöl, Klauenöl, Borretschöl, Lanolin, Emuöl, Hirschtalg, Murmeltieröl, Nerzöl, Borretschöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffewachs, Reiswachs, Oleanderwachs, Bienenwachs oder Wollwachs.

### Amine:

Geeignet sind Amine mit mindestens einer primären oder sekundären Amin-Funktion zur Amidierung, die ggf. eine oder mehrere Hydroxygruppen aufweisen können. Geeignete Amine sind zum Beispiel: Ethylendiamin, Diethylentriamin (DETA), Triethylentetramin (TETA), Tetraethylenpentamin (TEPA), Dipropylentriamin, Tripropylentetramin, Tetrapropylenpentamin, Pentapropylenhexamin, Hexapropylenheptamin, sowie höhere Homologen auf Basis Ethylendiamin oder Propylendiamin, 1,2-Propylendiamin, 4,4'-Diaminodicyclohexylmethan, 3,3'-Dimethyl-4,4'-diaminodicyclohexylmethan, 4,4-Methylendiphenylendiamin, Isophorondiamin, Trimethylhexymethylendiamin, Neopentandiamin, Octamethylenediamin, Polyetheramine wie Polyetheramin D 2000 (BASF), Polyetheramin D 230 (BASF), Polyetheramin T 403 (BASF), Polyetheramin T 5000 (BASF) oder auch entsprechende Jeffamin-Typen von Huntsman, Piperazin, Aminoethylpiperazin, Bis(aminoethyl)piperazin, 1,3-Diaminopropan, 3-(Cyclohexylamino)propylamin, 3-(Methylamino)propylamin, N,N-Bis-(3-aminopropyl)methylamin, (3-(2-Aminoethylamino)propylamin), Dipropylen triamin, (N,N'-Bis-(3-aminopropyl)-ethylendiamin.

Geeignete, mindestens eine OH-Funktion aufweisende Hydroxylamine sind zum Beispiel: Ethanolamin, Propanolamin, Alkylethanolamine, Arylethanolamin, Alkylpropanolamin, wie zum Beispiel: Diethanolamin, Monoethanolamin, Diisopropanolamin, Isopropanolamin, Methylisopropanolami, Digylkolamin (2-(2-Aminoethoxy)ethanol), Dimethylethanolamin, N-(2-Hydroxyethyl)anilin, 1-(2-Hydroxyethyl)piperazin, 2-(2-Aminoethoxy)ethanol, 3-Amino-1-propanol, 5-Amino-1-pentanol, Butylethanolamin, Ethylethanolamin, N-Methylethanolamin, Aminopropylmonomethylethanolamin, 2-Amino-2-methylpropanol, Trishydroxymethylaminomethan (THMAM oder TRIS), N-(2-Aminoethyl)ethanolamin (AEEA). Es können auch entsprechende Alkoxylate, insbesondere Ethoxylate und/oder Propoxylate von Aminen verwendet werden, wie z.B. Alkylamine mit einer Hydroxyethyl- oder Hydroxypropyl-Einheit oder beispielsweise N-Hydroxyethyl-Cylohexyldiamin, N-Hydroxethyl-Isophorondiamin, N-Hydroxyethyl-Piperazin, Bis-(hydroxyethyl)toluendiamin.

Erfindungsgemäße Amide der Formel (I) können auch kommerziell erhältliche Amide mit OH- oder NH-Funktionen sein, wie beispielsweise von Evonik Goldschmidt: Rewomid® DC 212 S, Rewomid® DO 280 SE, Rewocid® DU 185 SE, Rewolub® KSM, REWOMID® C 212, REWOMID® IPP 240, REWOMID® SPA, Rewopon® IM AO, Rewopon® IM AN oder Rewopon® IM R 40 sowie DREWPLAST® 154, NINOL® 1301, NINOL® 40-CO, NINOL® 1281, NINOL® COMF, NINOL® M-10 und ethoxylierte Diethanolaminde wie NINOL® C-4 I, NINOL® C-5, NINOL® 1301 von Stepan oder DACAMID® MAL und DACAMID® DC von Sasol.

In einer bevorzugten Ausführungsform der Erfindung wird die Amidierung mit einem Unterschuss an Amin durchgeführt, so dass im Endprodukt möglichst wenig oder gar kein freies Amin mehr vorliegt. Da Amine generell durch ihre reizende oder ätzende Wirkung, keine vorteilhaften toxikologischen Eigenschaften haben, ist eine Minimierung der Amin-Anteile erwünscht und vorteilhaft. Bevorzugt sind die Amin-Anteile in der erfindungsgemäß verwendeten Abmischung, insbesondere die Anteile an primären und sekundären Amingruppen tragenden Verbindungen kleiner als 5 Gew.-%, besonders bevorzugt kleiner 3 Gew.-%, insbesondere bevorzugt kleiner als 1 Gew.-% bezogen auf die Summe aus Aminen und Amiden.

Als Amid der Formel (I) ist mindestens eine Verbindung der Formel (II) 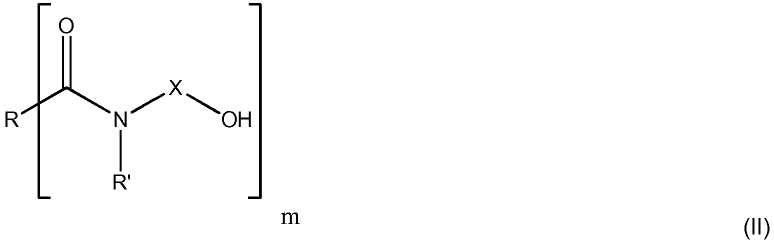 mit m, R, R' und X wie oben definiert, enthalten.

Bevorzugt enthält die erfindungsgemäße Zusammensetzung als Amid der Formel (I) mindestens eine Verbindung der Formel (III) 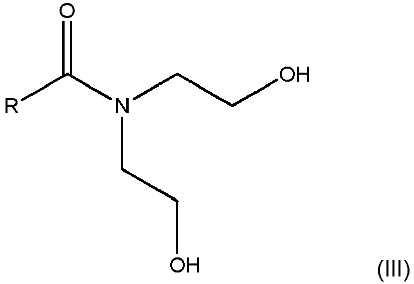 mit R wie oben definiert, wobei das Amid der Formel (III) vorzugsweise durch Umsetzung einer Fettsäure mit Diethanolamin erhalten wird.

Der Anteil der Amide der Formel (I), beträgt bezogen auf 100 Massenteilen an Polyolkomponenten vorzugsweise von 0,05 bis 10 Massenteile, bevorzugt von 0,1 bis 8, besonders bevorzugt von 0,25 bis 5 Massenteile und ganz besonders bevorzugt von 0,5 bis 3 Massenteile.

Der Anteil der Abmischung an der erfindungsgemäßen Zusammensetzung beträgt bezogen auf 100 Massenteilen an Polyolkomponenten vorzugsweise von größer 0,05 bis 20 Massenteile, bevorzugt von 0,2 bis 10 Massenteile und besonders bevorzugt von 0,5 bis 5 Massenteile.

In der Abmischung in der erfindungsgemäßen Zusammensetzung ist vorzugsweise mindestens eine Siloxanverbindung enthalten, bei der mindestens ein über eine Si-C-Bindung an ein Siliziumatom gebundener organischer Rest vorhanden ist, der mindestens zwei Kohlenstoffatome aufweist. Vorzugsweise sind mindestens 50 Gew.-% bevorzugt mindestens 95 Gew.-% bezogen auf die in der Abmischung vorhandenen Siloxanverbindungen und besonders bevorzugt alle der in der Abmischung enthaltenen Siloxanverbindungen solche, bei der mindestens ein über eine Si-C-Bindung an ein Siliziumatom gebundener organischer Rest vorhanden ist, der mindestens zwei Kohlenstoffatome aufweist.

Bevorzugte Siloxanverbindungen, insbesondere solche, bei denen mindestens ein über eine Si-C-Bindung an ein Siliziumatom gebundener organischer Rest vorhanden ist, der mindestens zwei Kohlenstoffatome aufweist, sind ausgewählt aus den Polysiloxanen, organomodifizierten Polysiloxanen, Polyethermodifizierten Polysiloxanen und Polyether-Polysiloxan-Copolymeren.

Als Siloxane können z. B. die im Stand der Technik genannten Substanzen verwendet werden. Vorzugsweise werden solche Siloxane eingesetzt, die für den jeweiligen Schaumtypen (Hartschäume, Heissweichschäume, viskoelastische Schäume, Esterschäume, HR-Schäume, halbharte Schäume) besonders geeignet sind. Geeignete Siloxane sind beispielsweise in den folgenden Schriften beschrieben: EP 1873209, EP 1544235, DE 10 2004 001 408, EP 0839852, WO 2005/118668, US 20070072951, DE 2533074, EP 1537159 EP 533202, US 3933695, EP 0780414, DE 4239054, DE 4229402, EP 867464. Die Herstellung der Siloxane kann wie im Stand der Technik beschrieben erfolgen. Besonders geeignete Beispiele zur Herstellung sind z. B. in US 4,147,847, EP 0493836 und US 4,855,379 beschrieben.

Bevorzugt werden Siloxane in der erfindungsgemäßen Abmischung verwendet, die neben den seitständigen Polyethermodifizierungen auch zumindest teilweise an den endständigen Siloxan-Einheiten Polyethergruppen tragen bzw. organomodifiziert sind. Dieser Strukturtyp ist in EP 1873209 beschrieben und kann durch die nachfolgend beschriebene Formel (IV) dargestellt werden.

Besonders bevorzugt ist in der Abmischung als Siloxanverbindung mindestens eine Verbindung der Formel (IV) vorhanden,

R¹-Si(CH₃)₂-O-[-Si(CH₃)₂-O-]ₐ-[-Si(CH₃)R²-O-]_{b}-Si(CH₃)₂-R³ (IV)

mit
R² gleich oder verschieden = -(CH₂)ₓ-O-(CH₂-CHR⁴-O)_{y}-R⁵ oder ein C₈ bis C₂₂-AlkylRest,
R¹ und R³ gleich oder verschieden = - CH₃ oder R², wobei mindestens ein Rest R¹ oder R³ gleich R² ist,
a+b+2 = 10 bis 150, vorzugsweise 25 bis 120,
b = 0 bis 25, vorzugsweise 0,5 bis 15,
x = 3 bis 10, vorzugsweise 3,
y = 1 bis 30,vorzugsweise 5 bis 25,
R⁴ = gleich oder verschieden H, -CH₃, -CH₂CH₃ oder Phenyl-Reste,
R⁵ = gleich oder verschieden H, Alkyl- oder Acyl-Reste, vorzugsweise H, CH₃ oder COCH₃.

Es kann vorteilhaft sein, wenn in der Abmischung Siloxanverbindungen der Formel (IV) vorhanden sind, bei denen mindestens 50 mol-% der Reste R⁴ = H, bevorzugt mindestens 90 mol-% der Reste R⁴ = H sind. Es kann außerdem vorteilhaft sein, wenn in der Abmischung Siloxanverbindungen der Formel (IV) vorhanden sind, bei denen mindestens 5 mol-% der Reste R⁴ = Methyl, bevorzugt mindestens 10 mol-% der Reste R⁴ = Methyl sind. Vorzugsweise sind in der Abmischung solche Siloxanverbindungen der Formel (IV) vorhanden, bei denen mindestens 50 mol-% der Reste R⁴ = H und bei denen mindestens 10 mol-% der Reste R⁴ = Methyl sind. Bevorzugt sind in der Abmischung solche Siloxanverbindungen der Formel (IV) vorhanden, bei denen mindestens 90 mol-% der Reste R⁴ = H und mindestens 5 mol-% der Reste R⁴ = Methyl sind.

Besonders bevorzugt sind in der Abmischung solche Siloxanverbindungen der Formel (IV) vorhanden, bei denen mindestens 5 mol-% der Reste R⁵ = Alkyl- oder Acyl-Reste, vorzugsweise CH₃- oder COCH₃-Reste, besonders bevorzugt Methyl-Reste sind.

Es kann vorteilhaft sein, wenn in der Abmischung solche Siloxanverbindungen der Formel (IV) enthalten sind, dass die bevorzugten Reste R⁴ und R⁵ in den oben angegeben mol-Prozent-Bereichen vorliegen.

In besonders bevorzugten in der Abmischung enthaltenen Siloxanverbindungen der Formel (IV) ist der Quotient a/b größer 7, bevorzugt größer 8 besonders bevorzugt größer 10.

Es kann vorteilhaft sein, wenn in der Abmischung solche Siloxanverbindungen der Formel (IV) enthalten sind, in denen mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R² in der Siloxanverbindung).

Die erfindungsgemäßen Zusammensetzungen weisen vorzugsweise von 0,05 bis 10 Massenteile, bevorzugt von 0,1 bis 7,5 und besonders bevorzugt von 0,25 bis 0,5 Massenteile an den oben genannten Siliziumverbindungen pro 100 Massenteile Polyolkomponenten auf.

Es kann vorteilhaft sein, wenn die Amide der Formel (I) bereits im Herstellverfahren der in der Zusammensetzung zu verwendenden Si-Verbindungen, meistens ein Hydrosilylierungsverfahren, als Lösemittel verwendet werden. Auf diese Weise wird ein zusätzlicher Abtrennschritt und/oder der Eintrag von ungewünschten Lösemitteln in die erfindungsgemäßen Zusammensetzungen vermieden.

Als Isocyanatkomponente kann die erfindungsgemäße Zusammensetzung alle zur Herstellung von Polyurethan-Schäumen, insbesondere Polyurethan- oder Polyisocyanurat-Hartschaumstoffen, geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4. Beispiele für geeignete Isocyanate sind in EP 1 712 578 A1, EP 1 161 474, WO 058383 A1, US 2007/0072951 A1, EP 1 678 232 A2 und der WO 2005/085310 genannt.

Die Polyolkomponente ist vorzugsweise verschieden von den in der Abmischung enthaltenen Amidverbindungen der Formel (I) und den Siloxanverbindungen. Geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen). Entsprechend den geforderten Eigenschaften der Schäume werden entsprechende Polyole verwendet, wie beispielsweise beschrieben in: US 2007/0072951 A1, WO 2007/111828 A2, US 2007/0238800, US 6359022 B1 oder WO 96 12759 A2. Ebenso werden bevorzugt verwendbare Pflanzenöl-basierende Polyole in verschiedenen Patentschriften beschrieben, wie beispielsweise in der WO 2006/094227, WO 2004/096882, US 2002/0103091, WO 2006/116456 und EP 1 678 232.

Falls in der erfindungsgemäßen Zusammensetzung ein oder mehrere Isocyanate vorliegen, liegt das Verhältnis von Isocyanat zu Polyol, ausgedrückt als Index, vorzugsweise im Bereich von 80 bis 500, bevorzugt 100 bis 350. Der Index beschreibt dabei das Verhältnis von tatsächlich eingesetztem Isocyanat (für eine stöchiometrische Umsetzung mit Polyol) zu berechnetem Isocyanat. Ein Index von 100 steht für ein molares Verhältnis der reaktiven Gruppen von 1 zu 1.

Als Katalysator, der die Ausbildung einer Urethan- oder Iscyanurat-Bindung katalysiert, weist die erfindungsgemäße Zusammensetzung vorzugsweise einen oder mehrere Katalysatoren für die Reaktionen Isocyanat-Polyol und/oder Isocyanat-Wasser und/oder Isocyanat-Trimerisierung geeigneten Katalysator auf. Geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren. Typische Beispiele für geeignete Katalysatoren sind sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

Bevorzugte in der erfindungsgemäße Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

Als optionales Treibmittel kann die erfindungsgemäße Zusammensetzung Wasser oder ein anderes chemisches oder physikalisches Treibmittel aufweisen. Wird Wasser als Treibmittel eingesetzt, so hängen geeignete Wasser-Gehalte im Sinne dieser Erfindung davon ab, ob zusätzlich zum Wasser noch ein oder mehrere Treibmittel eingesetzt werden oder nicht. Bei rein Wasser getriebenen Schäumen liegen die Wassergehalte typischerweise bei 1 bis 20 pphp, werden zusätzlich andere Treibmittel eingesetzt, verringert sich die Einsatzmenge auf üblicherweise 0,1 bis 5 pphp. Es ist auch möglich eine vollkommen wasserfreie erfindungsgemäße Zusammensetzung einzusetzen.

Sind in der erfindungsgemäßen Zusammensetzung andere Treibmittel als Wasser vorhanden, können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine, Sauerstoffhaltige Verbindungen wie Methylformiat und Dimethoxymethan, oder Chlorkohlenwasserstoffe, bevorzugt 1,2-Dichlorethan.

Neben oder an Stelle von Wasser und gegebenenfalls physikalischen Treibmitteln können auch chemische Treibmittel eingesetzt werden, die mit Isocyanaten unter Gasentwicklung reagieren, wie beispielsweise Ameisensäure.

Als Additive können die erfindungsgemäßen Zusammensetzungen weitere bei der Herstellung von Polyurethanschäumen einsetzbare Additive aufweisen. Häufig eingesetzte Additive sind z. B. Flammschutzmittel.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Als weitere Additive können in der Zusammensetzung optional auch nach dem Stand der Technik bekannte weitere Komponenten enthalten sein, wie z. B. Polyether, Nonylphenolethoxylate oder nichtionische Tenside.

Die erfindungsgemäßen Zusammensetzungen können zur Herstellung von PU-Schäumen eingesetzt werden.

Die erfindungsgemäßen Zusammensetzungen können z. B zur Herstellung von Polyurethanschäumen, insbesondere Polyurethanhartschäumen verwendet werden. Insbesondere können die erfindungsgemäßen Zusammensetzungen in einem erfindungsgemäßen Verfahren zur Herstellung von Polyurethan- oder Polyisocyanuratschaumstoffen (Polyurethanschäume), insbesondere zur Herstellung von Polyurethanhartschäumen verwendet werden, die sich dadurch auszeichnen, dass eine erfindungsgemäße Zusammensetzung umgesetzt wird.

Das erfindungsgemäße Verfahren zur Herstellung von Polyurethanschäumen, insbesondere Polyurethanhartschäumen, kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine zusammenfassende Darstellung des Stands der Technik, der verwendbaren Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987,(3), Seite 1561 bis 1757, und in "Ullmann's Encyclopedia of Industrial Chemistry" Vol. A21, VCH, Weinheim, 4. Auflage 1992, S. 665 bis 715.

Durch die Verwendung der erfindungsgemäßen Zusammensetzung bei der Herstellung von Polyurethanhartschäumen sind die erfindungsgemäßen Polyurethanschäume zugänglich.

Eine bevorzugte Polyurethan- bzw. Polyisocyanurat-Hartschaumformulierung im Sinne dieser Erfindung würde ein Raumgewicht von 20 bis 150 kg/m³ ergeben und hat vorzugsweise die in Tabelle 1 genannte Zusammensetzung.

**Tabelle 1: Zusammensetzung einer Polyurethan- bzw. Polyisocyanurat-Hartschaumformulierung**

| Komponente | Gewichtsteile |
|---|---|
| Polyol | 100 |
| Amin-Katalysator | 0,05 bis 5 |
| Kalium-Trimerisierungskatalysator | 0 bis 10 |
| Polyethersiloxan/Amid-Abmischung | 0,1 bis 5 |
| Wasser | 0,1 bis 20 |
| Treibmittel | 0 bis 40 |
| Flammschutzmittel | 0 bis 50 |
| | |
| Isocyanat-Index: 80 bis 500 | |

Die erfindungsgemäßen Polyurethanschäume, insbesondere Polyurethanhartschäume, zeichnen sich nach Maßgabe der Ansprüche dadurch aus, dass sie mindestens eine Amidverbindung gemäß Formel (I) und mindest eine Siloxanverbindung, jeweils wie oben definiert, aufweisen, wobei das Massenverhältnis von Siloxanverbindungen zu Verbindungen der Formel (I) (vorliegend in gebundener und/oder ungebundener Form) von 1 zu 1 bis 5 zu 1 beträgt. Vorzugsweise enthalten die erfindungsgemäßen Polyurethanschäume, insbesondere Polyurethan- oder Polyisocyanurat-Hartschäume von 0,1 bis 8 Massen-%, bevorzugt 0,2 bis 5 Massen-% und besonders bevorzugt von 0,5 bis 3 Massen-% an Verbindungen der Formel (I) in gebundener und/oder ungebundener Form.

Erfindungsgemäße Polyurethanschäume, insbesondere Polyurethanhartschäume, zeichnen sich außerdem auch dadurch aus, dass sie durch das erfindungsgemäße Verfahren erhältlich sind.

Bevorzugte erfindungsgemäße Polyurethanschäume, insbesondere Polyurethanhartschäume, die durch Verwendung der erfindungsgemäßen Zusammensetzung enthaltend eine Abmischung von Amid- und Siloxan-Verbindung hergestellt wurden, weisen eine Wärmeleitfähigkeit kleiner 24 mW/m•K, bevorzugt kleiner 23 mW/m•K auf.

Die erfindungsgemäßen Polyurethanschäume (Polyurethan- oder Polyisocyanuratschaumstoffe), insbesondere Polyurethanhartschäume, können als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen verwendet werden.

Die erfindungsgemäßen Kühlapparaturen zeichnen sich dadurch aus, dass sie als Isoliermaterial einen erfindungsgemäßen Polyurethanschaum (Polyurethan- oder Polyisocyanuratschaumstoff), insbesondere Polyurethanhartschaum, aufweisen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1:Herstellung der Amide:

### Beispiel 1a: Amid 1

Unter Stickstoff wurden 245 g Sojaöl und 26,4 g Diethanolamin mit 0,3 g Na-Methylat versetzt und für 5 h bei 90°C gerührt. Anschließend wurden 6,3 g Polyvest® OC 800 S (Additionsprodukt aus Polybutadien und Maleinsäureanhydrid erhältlich bei Evonik Degussa GmbH) zugegeben und bei 80°C für 1 h gerührt. Man erhielt ein klares gelbliches Produkt.

### Beispiel 1b: Amid 2

Unter Stickstoff wurden 235 g Sojaöl und 42 g Diethanolamin mit 0,6 g Na-Methylat versetzt und für 5 h bei 90°C gerührt. Anschließend wurden 3,8 g Rizinolsäure zugegeben und bei 80°C für 1 h gerührt. Man erhielt ein klares gelbliches Produkt.

### Beispiel 1c: Amid 3

Als kommerziell erhältliches Diethanolamid wurde Rewocid® DU 185 SE der Evonik Goldschmidt GmbH verwendet.

### Beispiel 1d: Amid 4

Als weiteres kommerziell erhältliches Diethanolamid wurde Rewomid® DO 280 SE von Evonik Goldschmidt verwendet.

### Beispiel 2: Herstellung von Siloxanverbindungen

Als Siloxane wurden Siloxane der Formel (IV) wie in EP 1873209 beschrieben hergestellt. Die in den Tabellen 2 und 3 angegebenen Indizes und Reste beziehen sich auf die oben angegebene Formel (IV). In Tabelle 2 ist der Aufbau der Reste R² angegeben. Zur Herstellung der Verbindungen der Formel (IV) wurden demgemäß die von dem Rest R² abgeleiteten ungesättigten Allylpolyether bzw. Alken-Verbindungen eingesetzt.

**Tabelle 2: Strukturen der mit A bis G bezeichneten Reste R²**

| R² | R⁴ | R⁵ | x | y |
|---|---|---|---|---|
| A | 35 mol %Me; 65 mol% H | H | 3 | 23 |
| B | 38 mol %Me; 62 mol% H | Me | 3 | 23 |
| C | 20 mol Me%; 80 mol% H | Me | 3 | 17 |
| D | 100 mol% H | Me | 3 | 13 |
| E | 25 mol %Me; 75 mol% H | H | 3 | 13 |
| F | 20 mol %Me; 80 mol% H | H | 3 | 25 |
| G | | C₁₆H₃₃ | 0 | 0 |

Unter Verwendung der von den unterschiedlichen Resten R² abgeleiteten ungesättigten Allylpolyether bzw. Alken-Verbindungen wurden die in Tabelle 3 angegebenen Siloxanverbindungen der Formel (IV) hergestellt.

**Tabelle 3, Zusammenfassung der Siloxan-Strukturen:**

| Siloxan | R¹ | R³ | R² | a | b |
|---|---|---|---|---|---|
| 1 | R² | R² | 50 mol% A, 50 mol% B | 40 | 4 |
| 2 | R² | R² | 100 mol% E | 40 | 4 |
| 3 | Me | Me | 50 mol% A, 50 mol% F | 25 | 2 |
| 4 | R² | R² | 70 mol% D, 30 mol% E | 20 | 0,5 |
| 5 | Me | Me | 70 mol% C, 30 mol% E | 52 | 8 |
| 6 | R² | R² | 70 mol% F, 30 mol% G | 60 | 8 |
| 7 | Me | Me | 100 mol% A | 25 | 2 |

### Beispiel 3: Herstellung von Abmischungen

Für die Verschäumungen wurden erfindungsgemäße Abmischungen aus Amiden und Siloxanen hergestellt. Für Vergleichsversuche wurden auch Abmischungen mit den bisher bekannten Abmischkomponenten hergestellt. Die Herstellung der Abmischungen erfolgte durch einfaches Zusammengeben der Komponenten und anschließendes 5-minütiges Rühren. Die Zusammensetzungen der Abmischungen sind in Tabelle 4 wiedergegeben.

Als typische Vertreter von nicht amidischen Verbindungen wurden in den Vergleichsbeispielen die folgenden Substanzen verwendet:
A) Nonylphenol + 8EO: Umsetzungsprodukt von Nonylphenol mit 8 mol Ethylenoxid pro OH-Funktion, kommerziell erhältlich beispielweise als Arkopal® N 080 von Clariant.
B) Rizinusöl, kommerziell erhältlich beispielweise von Fa. Alberding + Boley, Krefeld).
C) PEG 400 Dioleat, kommerziell erhältlich beispielweise als MARLOWET® 4702 von Sasol.

**Tabelle 4: Abmischungen von Organosiloxanen mit Amiden (Angaben in Gewichtsteilen) die in Beispiel 4 als Schaumstabilisatoren verwendet werden**

| Beispiel | Organosiloxan | Abmischkomponente |
|---|---|---|
| 3a | Siloxan 1, 50 Teile | Amid 1, 50 Teile |
| 3b | Siloxan 1, 80 Teile | Amid 1, 20 Teile |
| 3c | Siloxan 1, 50 Teile | Amid 2, 50 Teile |
| 3d | Siloxan 1, 50 Teile | Amid 3, 50 Teile |
| 3e | Siloxan 1, 50 Teile | Amid 4, 50 Teile |
| 3f | Siloxan 2, 50 Teile | Amid 1, 50 Teile |
| 3g | Siloxan 2, 50 Teile | Amid 2, 50 Teile |
| 3h | Siloxan 2, 50 Teile | Amid 3, 50 Teile |
| 3i | Siloxan 3, 50 Teile | Amid 1, 50 Teile |
| 3j | Siloxan 4, 50 Teile | Amid 1, 50 Teile |
| 3k | Siloxan 5, 50 Teile | Amid 2, 50 Teile |
| 3l | Siloxan 6, 50 Teile | Amid 3, 50 Teile |
| 3m | Siloxan 7, 50 Teile | Amid 3, 50 Teile |
| 3V1 | Siloxan 1, 50 Teile | A), 50 Teile |
| 3V2 | Siloxan 1, 50 Teile | B), 50 Teile |
| 3V3 | Siloxan 1, 50 Teile | C), 50 Teile |
| 3V4 | Siloxan 1, 80 Teile | C), 20 Teile |

### Beispiel 4: Anwendungsbeispiele Verschäumung

Die anwendungstechnischen Vorteile gegenüber dem Stand der Technik, die der Einsatz der erfindungsgemäßen Abmischungen als Schaumstabilisatoren in Polyurethanschäumen ermöglicht, werden im Folgenden anhand von Anwendungsbeispielen aufgezeigt.

Die Durchführung der Verschäumungen erfolgte im Handmischverfahren. Dazu wurden Polyol, Katalysator(en), Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt und im Falle der Pour-in-Place-Verschäumung im Becher selbst aufgeschäumt oder in den anderen Verschäumungen sofort in eine thermostatisierte Aluminiumform überführt, welche mit Polyethylenfolie ausgekleidet war. Formtemperatur und Geometrie variierten dabei je nach Schaumformulierung. Die Einsatzmenge an Schaumformulierung war dabei so bemessen, dass sie um 15 % über der zur Mindestbefüllung der Form notwendigen Menge lag.

Einen Tag nach der Verschäumung wurden die Schaumstoffe analysiert. Bei den Formschäumen wurden Oberfläche und Innenstörungen ebenfalls subjektiv anhand einer Skala von 1 bis 10 beurteilt. Die Porenstruktur (mittlere Zahl der Zellen pro 1 cm) wurde auf einer Schnittfläche optisch durch Vergleich mit Vergleichsschäumen beurteilt. Die Wärmeleitzahl (λ-Wert) wurde an 2,5 cm dicken Scheiben mit einem Gerät vom Typ Hesto Lambda Control gemessen.

### PUR-Hartschaumsysteme für Isolation von Kühlmöbeln

Es wurden die zwei in den Tabellen 5 und 7 angegebenen, für dieses Einsatzgebiet abgestimmte Formulierungen verwendet, die jeweils mit erfindungsgemäßen Schaumstabilisatoren und nicht erfindungsgemäßen Schaumstabilisatoren verschäumt wurde. Dabei wurde die Reaktionsmischung in eine auf 45 °C thermostatisierte Aluminiumform von 145 cm x 14,5 cm x 3,5 cm Größe eingetragen.

**Tabelle 5: Formulierung Kühlschrank-Isolation Nr. 1**

| Komponente | Gewichtsteile |
|---|---|
| Daltolac® R 471* | 100 Teile |
| N,N-Dimethylcyclohexylamin | 1,5 Teile |
| Wasser | 2,6 Teile |
| cyclo-Pentan | 13,1 Teile |
| Schaumstabilisator | 1,5 Teile |
| | |
| Desmodur® 44V20L** | 198,5 Teile |

| | |
|---|---|
| * Polyetherpolyol der Firma Huntsman ** polymeres MDI der Firma Bayer; 200 mPa*s; 31,5% NCO; Funktionalität 2,7 | |

Die in der nachfolgenden Tabelle 6 dargestellten Ergebnisse lassen erkennen, dass die erfindungsgemäßen Stabilisatoren durchweg bessere Oberflächenqualitäten ermöglichen als die nicht erfindungsgemäßen Vergleichs-Stabilisatoren, die keine erfindungsgemäßen Verbindungen (Amide) enthalten. Der weiteren sind die Wärmeleitfähigkeiten deutlich niedriger als die in EP 767199 beschrieben werden.

**Tabelle 6: Ergebnisse zu Kühlschrank-Isolation, System Nr. 1**

| Bsp. | Schaumstabilisator aus Bsp. | Defekte (1-10) oben/unten/innen | Zellen / cm⁻¹ | λ-Wert / mW/m•K |
|---|---|---|---|---|
| 4a | 3V1 | 5/4/5 | 35-39 | 22,6 |
| 4b | 3V2 | 5/4/4 | 35-39 | 22,6 |
| 4c | 3V3 | 5/4/4 | 35-39 | 22,8 |
| 4d | 3V4 | 6/4/5 | 35-39 | 22,5 |
| 4e | 3a | 7/5/6 | 40-44 | 22,2 |
| 4f | 3b | 8/5/7 | 40-44 | 21,8 |
| 4g | 3c | 6/4/5 | 40-44 | 22,4 |
| 4h | 3d | 7/5/6 | 40-44 | 22,2 |
| 4i | 3e | 7/4/6 | 40-44 | 22,3 |
| 4j | 3f | 7/5/7 | 40-44 | 22,0 |
| 4k | 3g | 7/4/7 | 40-44 | 22,2 |
| 4l | 3h | 7/6/6 | 40-44 | 22,1 |
| 4m | 3i | 7/5/7 | 40-44 | 22,3 |
| 4n | 3j | 7/4/6 | 40-44 | 22,2 |
| 4o | 3k | 6/5/5 | 40-44 | 22,4 |
| 4p | 3l | 7/6/6 | 40-44 | 22,1 |
| 4q | 3m | 7/5/7 | 40-44 | 22,2 |
| 4V1 | 3a | 5/4/5 | 35-39 | 24,1 |

Im Vergleichbeispiel 4V1 wurde die Formulierung Nr. 1 entsprechend verändert und wie in EP 0767199 ein höherer Anteil an Fettsäureamid verwendet. Es wurden 85 Teile Daltolac R 471, 15 Teile Amid Nr. 3 und 1,5 Teile Abmischung 3a eingesetzt, damit liegt das Verhältnis von Säureamid zu Siloxan bei 20:1. Man erhielt in 4V1 einen Schaum mit schlechteren Oberflächen und schlechterer Wärmeleitfähigkeit. Die Wärmeleitfähigkeitswerte, die in EP 0767199 beschrieben werden, liegen noch höher bei größer 25 mW/m•K.

In Tabelle 7 ist eine Schaumformulierung beschrieben, in der ein halogenierter Kohlenwasserstoff in Kombination mit Wasser als Treibmittel verwendet wird.

**Tabelle 7: Formulierung Kühlschrank-Isolation Nr. 2**

| **Komponente** | **Gewichtsanteil** |
|---|---|
| Daltolac® R 471* | 60 Teile |
| Voranol® RN 490** | 40 Teile |
| N,N-Dimethylcyclohexylamin | 2,0 Teile |
| Solkane 141b | 18 Teile |
| Wasser | 2,0 Teile |
| Schaumstabilisator | 2,0 Teile |
| | |
| Desmodur® 44V20L*** | 178 Teile |

| | |
|---|---|
| * Polyetherpolyol der Firma Huntsman ** Polyetherpolyol der Firma Dow *** polymeres MDI der Firma Bayer | |

Die in Tabelle 8 dargestellten Ergebnisse lassen erkennen, dass die erfindungsgemäßen Stabilisatoren auch wenn statt Pentan ein halogenierter Kohlenwasserstoff als Treibmittel verwendet wird, durchweg bessere Oberflächenqualitäten ermöglichen als die nicht erfindungsgemäßen Vergleichs-Stabilisatoren, die keine Amide enthalten.

**Tabelle 8: Ergebnisse zu Kühlschrank-Isolation, System Nr. 2**

| Bsp. | Stabilisator aus Bsp. | Defekte (1-10) oben/unten/innen | Zellen / cm⁻¹ | λ-Wert / mW/m•K |
|---|---|---|---|---|
| 4r | 3V1 | 6/5/6 | 35-39 | 22,6 |
| 4s | 3a | 8/6/8 | 35-39 | 22,6 |
| 4t | 3c | 8/7/8 | 35-39 | 22,8 |
| 4u | 3d | 8/8/8 | 35-39 | 22,5 |

## Patentansprüche

1. Zusammensetzung, geeignet zur Herstellung von Polyurethanschäumen, die zumindest eine Polyolkomponente, einen Katalysator, der die Ausbildung einer Urethan- oder Isocyanurat-Bindung katalysiert, optional ein Treibmittel, gegebenenfalls weitere Additive und gegebenenfalls eine Isocyanat-Komponente aufweist, **dadurch gekennzeichnet, dass** die Zusammensetzung zusätzlich eine Abmischung aufweist, die mindestens ein Amid der Formel (I) 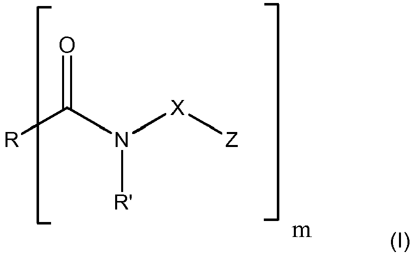 mit
R einem m-bindigen organischen Rest,
R' gleich oder verschieden H oder organischer Rest oder ein Rest -X-Z,
m = 1 bis 5,
Z gleich oder verschieden OH oder NHR", mit R" = H oder Alkyl, und
X gleich oder verschieden ein zweibindiger organischer Rest mit mindestens zwei Kohlenstoffatomen, und mindest eine Siloxanverbindung aufweist, wobei das Massenverhältnis von Siloxanverbindungen zu Verbindungen der Formel (I) von 1 zu 1 bis 5 zu 1 beträgt,
wobei die Zusammensetzung als Amid der Formel (I) mindestens eine Verbindung der Formel (II) 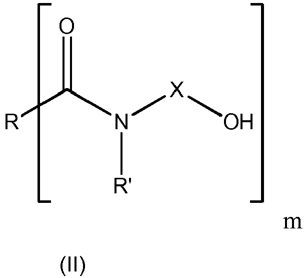 mit m, R, R' und X wie oben definiert, enthält.

2. Zusammensetzung nach Anspruch 1, **dadurch gekennzeichnet, dass** sie sie als Amid der Formel (I) mindestens eine Verbindung der Formel (III) 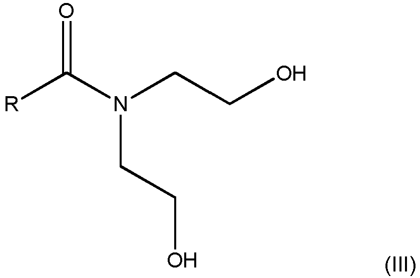 mit R wie oben definiert enthält.

3. Zusammensetzung nach einem der Ansprüche 1 oder 2, **dadurch gekennzeichnet, dass** der Anteil der Amide der Formel (I), bezogen auf 100 Massenteilen an Polyolkomponenten von 0,1 bis 10 Massenteile beträgt.

4. Zusammensetzung nach mindestens einem der Ansprüche 1 bis 3, **dadurch gekennzeichnet, dass** in der Abmischung mindestens eine Siloxanverbindung enthalten ist, bei der mindestens ein über eine Si-C-Bindung an ein Siliziumatom gebundener organischer Rest vorhanden ist, der mindestens zwei Kohlenstoffatome aufweist.

5. Zusammensetzung nach mindestens einem der Ansprüche 1 bis 4, **dadurch gekennzeichnet, dass** als Siloxanverbindung mindestens eine Verbindung der Formel (IV)
R¹-Si(CH₃)₂-O-[-Si(CH₃)₂-O-]ₐ-[-Si(CH₃)R²-O-]_{b}-Si(CH₃)₂-R³ (IV)
vorhanden ist, mit
R² gleich oder verschieden = -(CH₂)ₓ-O-(CH₂-CHR⁴-O)_{y}-R⁵ oder ein C₈ bis C₂₂-Alkyl-Rest
R¹ und R³ gleich oder verschieden = - CH₃ oder R², wobei mindestens ein Rest R¹ oder R³ gleich R² ist,
a+b+2 = 10 bis 150,
b = 0 bis 25,
x = 3 bis 10,
y = 1 bis 30,
R⁴ = gleich oder verschieden H, -CH₃, -CH₂CH₃ oder Phenyl-Reste,
R⁵ = gleich oder verschieden H, Alkyl- oder Acyl-Reste.

6. Zusammensetzung nach Anspruch 5, **dadurch gekennzeichnet, dass** mindestens 50 mol-% der Reste R⁴ = H sind.

7. Zusammensetzung nach Anspruch 5 oder 6, **dadurch gekennzeichnet, dass** mindestens 5 mol-% der Reste R⁴ = Methyl sind.

8. Zusammensetzung nach einem der Ansprüche 5 bis 7, dass mindestens 5 mol-% der Reste R⁵ = Alkyl- oder Acyl-Reste sind.

9. Verfahren zur Herstellung von Polyurethan- oder Polyisocyanuratschaumstoffen (Polyurethanschäume), durch Umsetzung einer Zusammensetzung gemäß einem der Ansprüche 1 bis 8.

10. Polyurethanschäume, enthaltend mindestens eine Amidverbindung gemäß Formel (I), wobei als Amid der Formel (I) mindestens eine Verbindung der Formel (II) enthalten ist, und mindestens eine Siloxanverbindung, jeweils wie in den vorangegangenen Ansprüchen 1 bis 8 definiert, aufweist, wobei das Massenverhältnis von Siloxanverbindungen zu Verbindungen der Formel (I) 1 zu 1 bis 5 zu 1 beträgt.

11. Polyurethanschäume, erhältlich durch ein Verfahren gemäß Anspruch 9.

12. Verwendung von Polyurethanschäumen gemäß Anspruch 10 oder 11 als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungschäumen oder Sprühschäumen.

13. Kühlapparatur, die als Isoliermaterial einen Polyurethanschaum gemäß einem der Ansprüche 10 und 11 aufweist.

## Claims

1. Composition suitable for producing polyurethane foams which includes at least a polyol component, a catalyst catalysing the formation of a urethane or isocyanurate bond, optionally a blowing agent, optionally further additives and optionally an isocyanate component, **characterized in that** the composition additionally includes an admixture including at least one amide of formula (I) 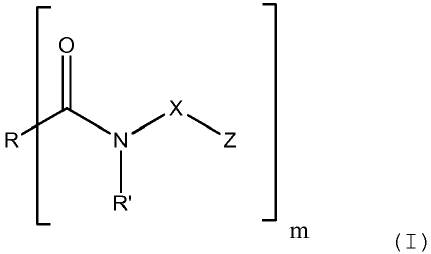 where
R is an m-valent organic radical,
R' in each occurrence is the same or different and represents H or an organic radical or a -X-Z radical,
m = 1 to 5,
Z in each occurrence is the same or different and represents OH or NHR'', where R'' = H or alkyl, and
X in each occurrence is the same or different and represents a divalent organic radical having at least two carbon atoms, and at least one siloxane compound, wherein the mass ratio of siloxane compounds to compounds of formula (I) is in the range from 1:1 to 5:1, wherein the composition by way of amide of formula (I) includes at least one compound of formula (II) 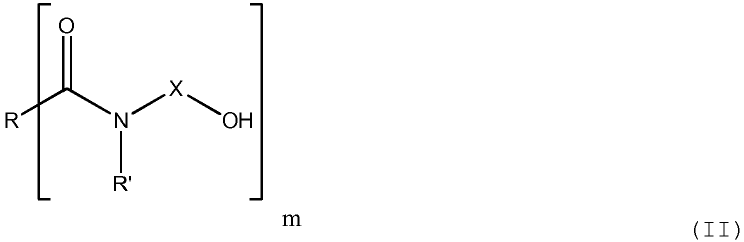 where m, R, R' and X are each as defined above.

2. Composition according to Claim 1, **characterized in that** by way of amide of formula (I) it contains at least one compound of formula (III) 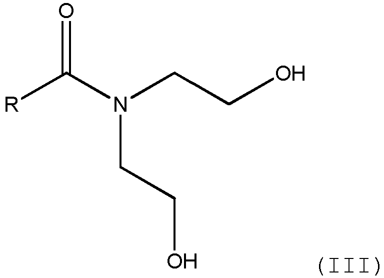 where R is as defined above.

3. Composition according to either of Claims 1 and 2, **characterized in that** the proportion of amides of formula (I) is in the range from 0.1 to 10 parts by mass, based on 100 parts by mass of polyol components.

4. Composition according to at least one of Claims 1 to 3, **characterized in that** the admixture contains at least one siloxane compound containing at least one organic radical having at least two carbon atoms which is bonded to a silicon atom through an Si-C bond.

5. Composition according to at least one of Claims 1 to 4, **characterized in that** by way of siloxane compound there is present at least one compound of formula (IV)
R¹-Si(CH₃)₂-O-[-Si(CH₃)₂-O-]ₐ-[-Si(CH₃)R²-O-]_{b}-Si(CH₃)₂-R³ (IV)
where
R² in each occurrence is the same or different = - (CH₂)ₓ-O- (CH₂-CHR⁴-O)_{y}-R⁵ or a C₈ to C₂₂ alkyl radical,
R¹ and R³ in each occurrence are the same or different = -CH₃ or R², provided at least one R¹ or R³ radical is equal to R²,
a+b+2 = 10 to 150,
b = 0 to 25,
x = 3 to 10,
y = 1 to 30,
R⁴ in each occurrence is the same or different = H,
-CH₃, -CH₂CH₃ or phenyl,
R⁵ in each occurrence is the same or different = H, alkyl or acyl.

6. Composition according to Claim 5, **characterized in that** at least 50 mol% of the R⁴ radicals are = H.

7. Composition according to Claim 5 or 6, **characterized in that** at least 5 mol% of the R⁴ radicals are = methyl.

8. Composition according to any one of Claims 5 to 7, **characterized in that** at least 5 mol% of the R⁵ radicals are = alkyl or acyl radicals.

9. Process for producing foamed polyurethane or polyisocyanurate materials (polyurethane foams) by reacting a composition according to any one of Claims 1 to 8.

10. Polyurethane foams containing at least one amide compound according to formula (I), wherein by way of amide of formula (I) at least one compound of formula (II) is included, and at least one siloxane compound, each as defined in the preceding Claims 1 to 8, wherein the mass ratio of siloxane compounds to compounds of formula (I) is in the range from 1:1 to 5:1.

11. Polyurethane foams obtainable by a process according to Claim 9.

12. Use of polyurethane foams according to Claim 10 or 11 as or for producing insulating materials, preferably insulating plates, refrigerators, insulating foams, vehicle seats, more particularly auto seats, roof liners, mattresses, filtering foams, packaging foams or spray foams.

13. Refrigerating apparatus including a polyurethane foam according to either of Claims 10 and 11 as an insulating material.

## Revendications

1. Composition, appropriée pour la fabrication de mousses de polyuréthane, qui comprend au moins un composant polyol, un catalyseur, qui catalyse la formation d'une liaison uréthane ou isocyanurate, éventuellement un agent gonflant, éventuellement d'autres additifs et éventuellement un composant isocyanate, **caractérisée en ce que** la composition comprend en outre un mélange, qui comprend au moins un amide de formule (I) 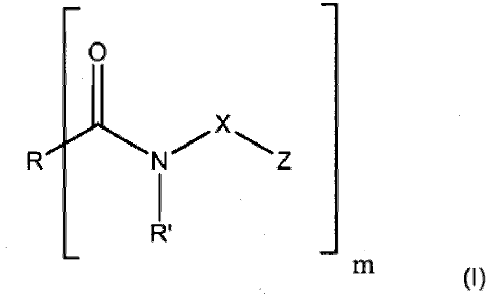 dans laquelle
R est un radical organique m-valent,
les R' sont, de manière identique ou différente, H ou un radical organique ou un radical -X-Z,
m = 1 à 5,
les Z sont, de manière identique ou différente, OH ou NHR", avec R" = H ou alkyle, et
les X sont, de manière identique ou différente, un radical organique bivalent contenant au moins deux atomes de carbone, et au moins un composé de siloxane, le rapport en masse entre les composés de siloxane et les composés de formule (I) étant de 1 sur 1 à 5 sur 1,
la composition contenant en tant qu'amide de formule (I) au moins un composé de formule (II) 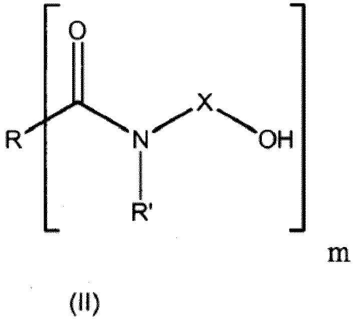 dans laquelle m, R, R' et X sont tels que définis précédemment.

2. Composition selon la revendication 1, **caractérisée en ce qu'**elle contient en tant qu'amide de formule (I) au moins un composé de formule (III) 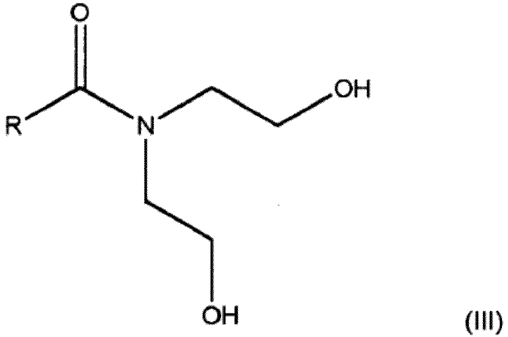 dans laquelle R est tel que défini précédemment.

3. Composition selon l'une quelconque des revendications 1 ou 2, **caractérisée en ce que** la proportion des amides de formule (I), par rapport à 100 parties en masse de composants polyol, est de 0,1 à 10 parties en masse.

4. Composition selon au moins l'une quelconque des revendications 1 à 3, **caractérisée en ce qu'**au moins un composé de siloxane est contenu dans le mélange, dans lequel au moins un radical organique relié par une liaison Si-C à un atome de silicium est présent, qui comprend au moins deux atomes de carbone.

5. Composition selon au moins l'une quelconque des revendications 1 à 4, **caractérisée en ce qu'**au moins un composé de formule (IV)
R¹-Si(CH₃)₂-O-[-(Si(CH₃)₂-O-]ₐ-[-Si(CH₃)R²-O-]_{b}-Si(CH₃)₂-R³ (IV)
est présent en tant que composé de siloxane,
dans lequel
les R² sont, de manière identique ou différente, -(CH₂)ₓ-O- (CH₂-CHR⁴-O)_{y}-R⁵ ou un radical alkyle en C₈ à C₂₂,
R¹ et R³ sont, de manière identique ou différente, -CH₃ ou R², au moins un radical R¹ ou R³ représentant R²,
a+b+2 = 10 à 150,
b = 0 à 25,
x = 3 à 10,
y = 1 à 30,
les R⁴ = de manière identique ou différente, H, -CH₃, - CH₂CH₃ ou des radicaux phényle,
les R⁵ = de manière identique ou différente, H, des radicaux alkyle ou acyle.

6. Composition selon la revendication 5, **caractérisée en ce qu'**au moins 50 % en moles des radicaux R⁴ = H.

7. Composition selon la revendication 5 ou 6, **caractérisée en ce qu'**au moins 5 % en moles des radicaux R⁴ = méthyle.

8. Composition selon l'une quelconque des revendications 5 à 7, **caractérisée en ce qu'**au moins 5 % en moles des radicaux R⁵ = radicaux alkyle ou acyle.

9. Procédé de fabrication de mousses de polyuréthane ou de polyisocyanurate (mousses de polyuréthane), par mise en réaction d'une composition selon l'une quelconque des revendications 1 à 8.

10. Mousses de polyuréthane, contenant au moins un composé d'amide selon la formule (I), au moins un composé de formule (II) étant contenu en tant qu'amide de formule (I), et au moins un composé de siloxane, chacun tels que définis dans les revendications 1 à 8 précédentes, le rapport en masse entre les composés de siloxane et les composés de formule (I) étant de 1 sur 1 à 5 sur 1.

11. Mousses de polyuréthane, pouvant être obtenues par un procédé selon la revendication 9.

12. Utilisation de mousses de polyuréthane selon la revendication 10 ou 11 en tant que ou pour la fabrication de matériaux isolants, de préférence de panneaux isolants, de réfrigérateurs, de mousses isolantes, de sièges de véhicules, notamment de sièges automobiles, de toits, de matelas, de mousses filtrantes, de mousses d'emballage ou de mousses pulvérisées.

13. Appareil réfrigérant, qui comprend en tant que matériau isolant une mousse de polyuréthane selon l'une quelconque des revendications 10 et 11.
